# EUROPÄISCHE PATENTSCHRIFT

(11) **EP 4 598 777 B1**
(45) Veröffentlichungstag und Bekanntmachung des Hinweises auf die Patenterteilung: **25.02.2026**
(21) Anmeldenummer: 24709008.7
(22) Anmeldetag: 01.03.2024
(51) Int. Cl.: B60Q 3/233, B60Q 3/60, F21W 106/00

(54) **BELEUCHTUNGSEINRICHTUNG FÜR DAS INTERIEUR EINES KRAFTFAHRZEUGS UND KRAFTFAHRZEUG**
ILLUMINATING DEVICE FOR THE INTERIOR OF A MOTOR VEHICLE, AND MOTOR VEHICLE
DISPOSITIF D'ÉCLAIRAGE POUR L'INTÉRIEUR D'UN VÉHICULE AUTOMOBILE, ET VÉHICULE AUTOMOBILE

(30) Priorität: 06.03.2023 DE 102023105469
(43) Veröffentlichungstag der Anmeldung: 13.08.2025
(73) Patentinhaber: AUDI AG, 85057 Ingolstadt (DE)
(72) Erfinder: BENLIYAN, Sarkis, 85049 Ingolstadt (DE); GASTL, Andreas, 85114 Buxheim (DE)
(74) Vertreter: Lindner Blaumeier Patent- und Rechtsanwälte
(86) Internationale Anmeldenummer: PCT/EP2024/055309
(87) Internationale Veröffentlichungsnummer: WO 2024/184205

(56) Entgegenhaltungen:
- EP-A1- 3 616 994
- EP-A1- 3 783 259
- EP-A1- 4 035 941
- EP-A1- 4 067 732
- EP-B1- 3 059 120
- CN-A- 112 298 026
- DE-A1- 102017 122 207
- DE-A1- 102019 124 555
- DE-A1- 102021 117 912
- JP-A- 2006 044 452
- JP-A- 2012 224 127
- KR-B1- 102 017 639

## Beschreibung

Die Erfindung betrifft eine Beleuchtungseinrichtung für das Interieur eines Kraftfahrzeugs, insbesondere für ein Verkleidungsteil und/oder die Rückenlehne eines Sitzes, aufweisend ein eine äußere Leuchtfläche mit einer Lichtausstrahlrichtung definierendes, passives Leuchtelement und wenigstens zwei unterschiedlich schaltbare Lichtquellen, wobei eine erste Lichtquelle das wenigstens teilweise transluzente Leuchtelement zur Beleuchtung in die Lichtausstahlrichtung durchleuchtet. Daneben betrifft die Erfindung ein Kraftfahrzeug mit einer solchen Beleuchtungseinrichtung.

Beleuchtungseinrichtungen, insbesondere auch zur Bereitstellung von Ambientelicht, sind im Interieur von Kraftfahrzeugen bereits seit langem bekannt. Beispielsweise wurde, um auch Designanforderungen gerecht werden zu können, vorgeschlagen, Lichtleiter zu verwenden, die in Verkleidungs- und Nutzteilen des Interieurs integriert werden können. Lichtleiter haben hierbei den Vorteil, wenig Bauraum zu benötigen und eine gewisse Flexibilität in der Formgebung und/oder Formbarkeit bereit zu stellen, sodass sie beispielsweise auch um Ecken und mit sich änderndem Verlauf anordenbar sind. Der Aspekt des Bauraums ist, gerade im Interieur des Kraftfahrzeugs, welches eine Vielzahl von Nutzelementen und zugehörige Komponenten umfasst, häufig aufgrund der geringen Verfügbarkeit eine relevante Erwägungsgröße.

Im Hinblick auf neuartige Designs in Verbindung mit robuster, verlässlicher Funktionalität wurden im Stand der Technik bereits abweichend von simplen Lichtleitern verschiedene andere Ausgestaltungen vorgeschlagen, die neuartige Arten zur Aussendung von Nutzlicht, Informationslicht und Ambientelicht bereitstellen. So wurden im Stand der Technik beispielsweise indirekte Beleuchtungseinrichtungen vorgeschlagen, bei denen Reflektorflächen eingesetzt werden, um Licht insbesondere verdeckt verbauter Lichtquellen in den Innenraum einzuleiten. Beispielsweise wurde eine Türkonstruktion vorgeschlagen, die an der nach außen gewandten Seite eine Lichtquelle aufweist, wobei das Licht durch einen Schlitz oder dergleichen als Ambientelicht in das Innere des Kraftfahrzeugs gelangen kann.

Andere, bereits seit längerer Zeit gängige Ansätze nutzen Hinterleuchtung bzw. Durchleuchtung von passiven Leuchtelementen. Das entsprechende Leuchtelement, welches nicht aus sich selbst heraus zum Leuchten ausgebildet ist, sondern Lichteintrag der Lichtquelle benötigt, kann im Bereich einer nach außen gewandten Leuchtfläche transluzente Bereiche umfassen, hinter denen wenigstens eine Lichtquelle angeordnet ist. Dabei wurden im Stand der Technik bereits eine Vielzahl von Varianten vorgeschlagen, um eine möglichst diffuse und somit gleichmäßige Ausleuchtung eines solchen transluzenten Bereichs zu erreichen, ohne dass die dahinterliegende Lichtquelle sichtbar wird. Ferner sind im Stand der Technik auch bereits Techniken bekannt, um die Existenz des transluzenten Bereichs bei deaktivierter Lichtquelle vor Blicken zu verbergen, sodass beispielsweise ein Verkleidungsteil mit einer solchen Beleuchtungseinrichtung bei deaktivierter Lichtquelle mit einer durchgängigen, gleichartigen Oberfläche erscheinen kann, auf welcher dann zur Herbeiführung eines besonderen Design-Effekts bei Aktivierung der Lichtquelle Nutzlicht und/oder Informationslicht und/oder Ambientelichte erscheinen kann.

Auch wurde bereits vorgeschlagen, zur weiteren Erhöhung des Ausgestaltungsfreiraums derartige bekannte Konzepte mit Lichtleitern zu integrieren, die als insbesondere diffuse Lichtquelle wirken.

DE 10 2012 100 816 A1 offenbart eine Fahrzeugleuchte für ein Kraftfahrzeug mit mindestens einem als Lichtleiter und Reflektor dienenden Lichtfunktionselement, mit welchem mehrere Lichtquellen derart zusammenwirken, dass ein erster Bereich des jeweiligen Lichtfunktionselements für das von einer ersten Lichtquelle abgestrahlte Licht als Reflektor und ein zweiter Bereich des jeweiligen Lichtfunktionselements für das von einer zweiten Lichtquelle abgestrahlte Licht als Lichtleiter dient. Entsprechend entstehende Lichtaustrittsflächen sind räumlich getrennt, sodass beispielsweise die erste Lichtquelle eine Bremslichtfunktion und die zweite Lichtquelle eine Schlusslichtfunktion bereitstellen kann. Weitere Funktionsmöglichkeiten für die im Außeneinsatz gedachte Fahrzeugleuchte umfassen Blinklicht und Positionslicht.

DE 103 41 739 A1 betrifft eine Innenleuchte für ein Kraftfahrzeug, die ein Gehäuse aufweist. Innerhalb des Gehäuses sind eine erste Lichtquelle und ein Reflektor angeordnet. Eine Lichtscheibe schließt das Gehäuse ab. Hierbei können die Lichtscheibe oder der Reflektor einen Lichtleiter ausbilden, wobei eine zweite Lichtquelle Licht in eine Seitenfläche der Lichtscheibe oder des Reflektors einkoppelt und wobei die Lichtscheibe oder der Reflektor Störstellen aufweist, die das durch die zweite Lichtquelle in die Lichtscheibe oder in den Reflektor eingekoppelte Licht in den Innenraum des Kraftfahrzeugs streuen. Hierbei soll eine Kombination von Flächenlicht und einstrahlendem Licht, beispielsweise als Leseleuchte, geschaffen werden.

DE 10 2018 205 352 B4 offenbart ein Leuchtenband für ein Kraftfahrzeug mit einer Vielzahl von nebeneinander entlang einer Reihe angeordneten Lichtquellen. Die Reihe erstreckt sich in einem Zwischenraum, welcher durch ein erstes Reflexionselement und ein zweites Reflexionselement ausgebildet ist, wobei das erste Reflexionselement zumindest eine voll reflektierende Spiegeloberfläche aufweist und das zweite Reflexionselement zumindest eine halbdurchlässige Spiegeloberfläche aufweist, sodass in Abhängigkeit von einer Leuchtstärke der jeweiligen Lichtquelle eine bestimmte Anzahl von Spiegelungen in den jeweiligen Spiegeloberfläche der beiden Reflexionselemente erzeugt wird ("endless mirror"-Effekt).

DE 10 2009 060 355 B4 betrifft eine Beleuchtungseinrichtung für den Innenraum eines Fahrzeugs, die einen Grundkörper zur Aufnahme wenigstens einer Lichtquelle aufweist. Ein flächiger erster Lichtleitkörper des Grundkörpers und ein flächiger zweiter Lichtleitkörper des Grundkörpers sind mit einer ersten respektive einer zweiten Lichtquelle verbunden, wobei der zweite Lichtleitkörper derart angeordnet ist, dass das aus dem zweiten Lichtleitkörper ausgekoppelte Licht den ersten Lichtleitkörper durchstrahlt. Die Beleuchtungseinrichtung kann beispielsweise in den Dachhimmel eines Fahrzeugs eingebaut werden.

EP 3 059 120 B1 offenbart eine Beleuchtungseinrichtung für ein Kraftfahrzeug, bei dem ein Vorsprung in einer Wand vorgesehen ist, in dem eine erste Lichtquelle befindlich ist und auf einen reflektierenden Bereich derselben Wand leuchtet, sodass der Eindruck eines Leuchtens der Wand entsteht. Ferner kann eine zweite Lichtquelle im Inneren der Leuchteinrichtung hinter dem reflektierenden Bereich vorgesehen sein, wobei der reflektierende Bereich auch Transparenzeigenschaften aufweist, sodass ein Lichtstrahl der zweiten Lichtquelle die Wand im reflektierenden Bereich passieren kann. Während die Beleuchtungseinrichtung grundsätzlich für den Außenbereich, konkret als Signalleuchte, gedacht ist, kann sie doch auch im Innenbereich eingesetzt werden.

Der Erfindung liegt die Aufgabe zugrunde, eine neuartige Ausgestaltung einer Beleuchtungseinrichtung für das Interieur eines Kraftfahrzeugs anzugeben, welche insbesondere neue Lichteffekte für Nutzlicht und/oder Ambientelicht und/oder Informationslicht bereitstellt.

Zur Lösung dieser Aufgabe ist bei einer Beleuchtungseinrichtung der eingangs genannten Art erfindungsgemäß vorgesehen, dass das Leuchtelement zur Festlegung der Leuchtfläche in wenigstens einem ein erstes Leuchtmuster definierenden Bereich in Lichtaustrittsrichtung transluzent und in wenigstens einem ein zweites Leuchtmuster definierenden Bereich reflektierend ausgebildet ist und eine zweite Lichtquelle zur Ausleuchtung der Außenseite des Leuchtelements derart vorgesehen ist, dass das von außen auf das Leuchtelement auftreffende Licht der zweiten Lichtquelle durch den reflektierenden Bereich in die Lichtaustrittsrichtung reflektiert wird, wobei das Leuchtelement zumindest im transluzenten Bereich derart ausgestaltet ist, dass das erste Leuchtmuster bei ausgeschalteter erster Lichtquelle von außen nicht erkennbar ist und das zweite Leuchtmuster bei ausgeschalteter erster und zweiter Lichtquelle von außen nicht erkennbar ist.

Das passive Leuchtelement wirkt mithin nicht selbst als Lichtquelle, sondern leuchtet erst bei Einwirkung wenigstens einer der beiden Lichtquellen. Der Begriff der Lichtaustrittsrichtung ist breit zu verstehen als ein nach außen gerichteter, von der Leuchtfläche ausgehender und/oder diese umfassender Raumwinkelbereich. Bei Betrieb der Lichtquellen wirkt es für einen Benutzer also so, als leuchteten die Leuchtmuster der Leuchtfläche. Hierbei sind das erste Leuchtmuster und das zweite Leuchtmuster als Teil einer gemeinsamen, zusammenhängenden Leuchtfläche zu verstehen, wobei die Leuchtmuster optional überlappen können, bevorzugt jedoch zumindest ineinander eingreifen und/oder anderweitig miteinander verflochten sind.

Erfindungsgemäß wird vorgeschlagen, zwei separate, simultan arbeitende Systeme, die auf unterschiedlichen Prinzipien basieren, in einer gemeinsamen Beleuchtungseinrichtung bereit zu stellen, um eine Vielzahl neuartiger Lichtmanifestationen bereit zu stellen. Dabei beruht ein zweites Teilsystem der Beleuchtungseinrichtung auf der Reflexion des Lichts an einer Oberfläche, mithin auf indirekter Beleuchtung, bei der keine direkte Lichtquelle sichtbar ist. Mit anderen Worten sieht eine besonders bevorzugte Ausgestaltung der vorliegenden Erfindung vor, dass die zweite Lichtquelle, insbesondere bezüglich der Lichtaustrittsrichtung, verdeckt verbaut ist. Das erste Teilsystem basiert auf Licht, das durch ein anderes Material, hier das wenigstens eine Material des Leuchtelements, welches bereichsweise transluzent gestaltet ist, scheint. Dies kann als eine Art "statisches Schattenspiel" verstanden werden. Für die erste Lichtquelle wirkt das Leuchtelement also als eine Schablone.

Die Teilsysteme und insbesondere die Leuchtmuster können unabhängig voneinander genutzt werden und können sich, insbesondere in einer Vielzahl von Farbvariation und Lichtstärken, ergänzen und verstärken, um komplett neuartige Atmosphären zu kreieren. Dabei sieht eine bevorzugte Ausgestaltung der vorliegenden Erfindung vor, dass beide Teilsysteme zum Aussenden von Ambientelicht ausgestaltet sind. Jedoch sind grundsätzlich auch andere Varianten denkbar, in denen wenigstens eines der Teilsysteme Nutzlicht und/oder Informationslicht ausstrahlt. Im letztgenannten Fall kann wenigstens eines der Leuchtmuster mithin zur Wiedergabe einer Information ausgestaltet sein.

Durch die erfindungsgemäße Beleuchtungseinrichtung können innerhalb des Kraftfahrzeugs optisch interessante und/oder Stimmungen kolportierende Leuchtflächen geschaffen werden. Nachdem für die jeweiligen Teilsysteme bereit äußerst kleinbauende Lösungen bekannt sind, lässt sich eine Integration auf engstem Raum auch für die erfindungsgemäße Beleuchtungseinrichtung realisieren, wobei gleichzeitig eine große Vielzahl an Möglichkeiten und unterschiedlichen Lichtmanifestationen bereit gestellt werden kann. Das erste Teilsystem kann als Durch-Licht bezeichnet werden, das zweite als Drauf-Licht.

Wird nur die erste Lichtquelle betrieben, ist nur das erste Leuchtmuster sichtbar. Bei alleinigem Betrieb der zweiten Lichtquelle erscheint nur das zweite Leuchtmuster. Bei Betrieb beider Lichtquellen sind beide Leuchtmuster aktiv. Bevorzugt ist ferner, wenn bei ausgeschalteten Lichtquellen die zugehörigen Leuchtmuster, welche beispielsweise als Grafiken realisiert sein können, nicht sichtbar sind.

Die Erfindung sieht vor, dass das Leuchtelement zumindest im transluzenten Bereich derart ausgestaltet ist, dass das erste Leuchtmuster bei ausgeschalteter erster Lichtquelle von außen nicht erkennbar ist und das zweite Leuchtmuster bei ausgeschalteter erster und zweiter Lichtquelle von außen nicht erkennbar ist. Auf diese Weise entsteht ein hervorragender optischer Eindruck auch dann, wenn keine oder nur eine der beiden Lichtquellen betrieben wird. Konkret kann beispielsweise vorgesehen sein, dass die Nichterkennbarkeit durch eine zur Erzeugung des transluzenten Bereichs und/oder des reflektierenden Bereichs gewählte Materialbehandlung gegeben ist. Beispielsweise können Laserbehandlungen und/oder Ätzprozesse und/oder andere Präzisionsprozesse eingesetzt werden, um das erste und/oder das zweite Leuchtmuster, insbesondere als Präzisionsmuster, nicht nur mit hervorragender Qualität und Genauigkeit, sondern auch derart, dass es in einer unbeleuchteten Situation nicht sichtbar ist, bereitzustellen. Hierbei kann das Leuchtelement, welches insbesondere zumindest im Wesentlichen plattenförmig ausgestaltet sein kann, beispielsweise aus einem bestimmten Material, beispielsweise einem Kunststoff, bestehen, welches lokal durch die Materialbehandlung, wie grundsätzlich im Stand der Technik bekannt, verändert wird, um die gewünschte Eigenschaft, also Transluzenz und/oder Reflektion, herbeizuführen. Denkbar sind jedoch auch Ausgestaltungen, in denen ein Grundkörper, beispielsweise aus Kunststoff, mit einer Deckschicht, beispielsweise aus einem Lack und/oder einer Folie, versehen wird und die Materialbehandlung an dem Lack durchgeführt wird, um die gewünschte Eigenschaft lokal und mit hoher Präzision derart zu erzielen, dass die Veränderung, insbesondere makroskopisch, nicht oder kaum erkennbar ist.

Alternativ oder zusätzlich ist es auch denkbar, dass die Nichterkennbarkeit durch eine in Lichtaustrittsrichtung wenigstens transluzente und gegen Lichtaustrittsrichtung wenigstens teilweise opake äußere Schicht und/oder durch eine lichtdiffundierende Strukturierung und/oder lichtdiffundierende Einschlüsse aufweisende äußere Schicht gegeben ist.

Zweckmäßig ist es ferner, wenn zumindest bei nicht betriebener erster Lichtquelle, bevorzugt auch bei betriebener erster Lichtquelle, diese durch das Leuchtelement, hinter dem sie angeordnet ist, nicht bzw. nicht genau erkennbar ist. Vorgesehen sein kann also beispielsweise, dass der transluzente Bereich gegen die Lichtaustrittsrichtung wenigstens so opak ist, dass die erste Lichtquelle bei Betrachtung der Leuchtfläche von außen wenigstens im ausgeschalteten Zustand nicht sichtbar ist. Besonders bevorzugt ist es in diesem Zusammenhang jedoch, wenn der transluzente Bereich zumindest lichtdiffundierend für Licht der ersten Lichtquelle ist. Auf diese Weise entsteht eine gleichmäßige, optisch ansprechende Ausgestaltung des ersten Leuchtmusters.

Besonders zweckmäßig ist eine Ausgestaltung, in der ein Grundkörper des Leuchtelements durch Schichten, beispielsweise Lacke, und/oder Folien derart ergänzt und ggf. materialbearbeitet wird, dass sich sowohl die gewünschten Leuchtmuster als auch gewünschte weitere Eigenschaften, insbesondere die Nichterkennbarkeit der Leuchtmuster, ergeben. Hierbei können beispielsweise unterschiedlichen Schichten und/oder Folien für die Bereitstellung des ersten und des zweiten Leuchtmusters vorgesehen sein, welchen, beispielsweise nach außen überdeckend, wenigstens eine weitere Folie oder Schicht zum Verbergen der Leuchtmuster (und insbesondere auch hinter dem Leuchtelement befindlicher Gegenstände, beispielsweise der ersten Lichtquelle), folgen kann.

Dabei stellt die grundsätzliche Ausgestaltung durch Kombination der beiden Teilsysteme, wie bereits erwähnt, eine sehr große Flexibilität im Hinblick auf Leuchteindrücke der Leuchtfläche bereit, die zumindest teilweise statisch und/oder zumindest teilweise dynamisch ausgefüllt werden kann. So kann beispielsweise bereits die Ausgestaltung des transluzenten und des reflektierenden Bereichs eine Prägung von bestimmten, bevorzugt unterschiedlichen, Lichteindrücken zur Folge haben. Eine zweckmäßige Ausgestaltung sieht mithin vor, dass der transluzente und der reflektierende Bereich zum Erzeugen unterschiedlicher Lichteindrücke, insbesondere unterschiedlicher Lichtdiffusion und/oder Lichtfarbe und/oder Farbtemperatur und/oder Lichtstärke, ausgebildet sind. Somit können bereits in der konkreten Gestaltung insbesondere auch auf die Unterschiedlichkeit der Teilsysteme abgestellt Grundvoraussetzungen für die gewünschten Lichtmanifestationen bereit gestellt werden.

Auch seitens der Lichtquellen kann eine bestimmte Prägung bereits wenigstens teilweise statisch vorgegeben sein. So kann beispielsweise vorgesehen sein, dass die erste und die zweite Lichtquelle Licht wenigstens einer unterschiedlichen Eigenschaft ausstrahlen, insbesondere unterschiedliche Lichtfarbe und/oder Farbtemperatur und/oder Lichtstärke. Insbesondere kann auf diese Weise eine einfach ansteuerbare, sich hervorragend in ein Gesamtdesign eines Interieurs eines Kraftfahrzeugs einfügende Ausgestaltung erreicht werden.

Mit besonderem Vorteil kann jedoch vorgesehen sein, dass die Beleuchtungseinrichtung ferner eine Steuereinheit zum Steuern des Betriebs der Lichtquellen aufweist. Die Steuereinheit kann hierbei insbesondere wenigstens ausgebildet sein, vier grundsätzliche Betriebsmodi bereitzustellen, nämlich einen ausgeschalteten Betriebsmodus, in dem keine Lichtquelle betrieben wird, zwei Einzelbetriebsmodi, in denen jeweils nur eine der Lichtquellen betrieben wird, und ein Kombinationsbetriebsmodus, in dem beide Lichtquellen betrieben werden. Dies stellt bereits eine grundsätzliche, einfach umsetzbare Variierbarkeit der Leuchterscheinung bereit.

Mit besonderem Vorteil kann jedoch vorgesehen sein, dass wenigstens eine der Lichtquellen bezüglich wenigstens einer Eigenschaft des ausgestrahlten Lichts, insbesondere der Lichtfarbe und/oder Farbtemperatur und/oder Lichtstärke, zu deren Veränderung ansteuerbar ist. Auf diese Weise ist es beispielsweise möglich, eine Beleuchtungseinrichtung bereitzustellen, die sowohl auf ihren speziellen Einsatzort, beispielsweise ein allgemeines Design des Interieurs, als auch auf persönliche Vorlieben eines Benutzers, beispielsweise eines Fahrers oder anderen Insassen, einstellbar ist. Hierbei kann eine Einstellbarkeit und entsprechende Ansteuerbarkeit mittels der Steuereinheit beispielsweise über eine Bedieneinrichtung des Kraftfahrzeugs bereitgestellt werden, jedoch auch automatisch, beispielsweise im Rahmen eines Komfortsystems, welches das Ambiente im Interieur, insbesondere auch das Ambientelicht, auf eine aktuelle Stimmung und/oder bekannte Vorliebe und/oder Farbwahl des Benutzers anpasst. Nicht nur lassen sich Insassen des Kraftfahrzeugs dann durch die Vielfalt möglicher Lichtgestaltungen erfreuen, sondern es lässt sich auch eine gewisse Magie in das Kraftfahrzeug einbringen, die das Wohlbefinden aller Insassen positiv zu beeinflussen vermag.

Eine besonders vorteilhafte Ausgestaltung ergibt sich auch, wenn die Steuereinheit zum dynamischen Betrieb wenigstens einer der Lichtquellen zum Erzeugen eines dynamischen Lichteindrucks der Leuchtfläche ausgebildet ist. Während sich eine bestimmte Dynamik auch bereits durch Aktivieren und Deaktivieren der Lichtquellen erreichen lässt, ergibt sich ein besonders großer Kreativitätsfreiraum, wenn die Lichtquellen mit veränderbarer Lichtfarbe und/oder Farbtemperatur und/oder Lichtstärke ansteuerbar sind. Beispielsweise können dann lebhaft oder beruhigend gestaltete animierte Leuchtflächen bereitgestellt werden. Dies kann zur Erzeugung bestimmter, komplett neuartiger, gewünschter Atmosphären führen.

In konkreter Ausgestaltung können die erste Lichtquelle und/oder die zweite Lichtquelle wenigstens eine LED umfassen und/oder in wenigstens einer Richtung ausgedehnt sein. LEDs lassen sich besonders kleinbauend realisieren und sind für beengtere Bauraumverhältnisse in Kraftfahrzeugen besonders geeignet. Konkret können, besonders bevorzugt für die zweite Lichtquelle, LED-Matrizen und/oder LED-Arrays, beispielsweise LED-Bänder, verwendet werden. Dabei eignet sich eine ausgedehnte Ausgestaltung insbesondere für die zweite Lichtquelle, um eine möglichst gleichmäßige Lichteinstrahlung auf den reflektierenden Bereich zu erzielen, sodass das zweite Leuchtmuster gleichmäßig ausgeleuchtet erscheint. Beispielsweise bieten sich hier LED-Bänder an. Für die erste Lichtquelle kann eine gleichmäßige Leuchterscheinung, wie bereits erwähnt wurde, auch anderweitig erreicht werden, beispielsweise durch eine lichtdiffundierende Ausgestaltung des Leuchtelements zumindest in dem transluzenten Bereich.

In einer konkreten Ausgestaltung der vorliegenden Erfindung kann vorgesehen sein, dass das Leuchtelement wenigstens in dem Bereich der Leuchtfläche gegen die Horizontale und die Vertikale geneigt ist und die zweite Lichtquelle oberhalb der Leuchtfläche angeordnet ist. Eine derartige Ausgestaltung eignet sich besonders für die Integration in Sitzlehnen oder sonstigen, zumindest im Wesentlichen vertikal verlaufenden Oberflächen. Insbesondere kann sich die Beleuchtungseinrichtung dann als eine Einbuchtung in der vertikal verlaufenden Fläche manifestieren, wobei die zweite Lichtquelle verdeckt oben in der Einbuchtung verbaut ist und der einsehbare Teil der Einbuchtung zumindest teilweise die Leuchtfläche bildet. Eine vergleichbare Ausgestaltung ist auch mit einer seitlich einstrahlenden, um eine vertikale Achse geneigte Beleuchtungsfläche gegeben.

In einer besonders bevorzugten Weiterbildung der vorliegenden Erfindung ist vorgesehen, dass die Beleuchtungseinrichtung als ein Lichtmodul mit einem das Leuchtelement umfassenden Träger, an dem die Lichtquellen befestigt sind, ausgebildet ist. Dann ergibt sich ein zusammenhängendes, im Interieur des Kraftfahrzeugs einsetzbares Teil, welches insbesondere in einer modularen Ausgestaltung an verschiedenen Positionen im Kraftfahrzeug eingesetzt werden kann. Konkret kann beispielsweise vorgesehen sein, dass das Lichtmodul zum Einsetzen in ein Verkleidungsteil des Kraftfahrzeugs ausgebildet ist, wobei der Träger eine die Oberfläche des Verkleidungsteils fortsetzende, die Leuchtfläche umfassende Oberfläche aufweist. Insbesondere bei einer Lichteinstrahlung von oben oder von der Seite auf eine schräg gestellte Leuchtfläche durch die zweite Lichtquelle lassen sich hierbei auch äußerst klein und somit bauraumsparend realisierte Lichtmodule erreichen, die selbst im engen Bauraum im automobilen Interieur einsetzbar sind.

Neben der Beleuchtungseinrichtung umfasst die vorliegende Erfindung auch ein Kraftfahrzeug, welches wenigstens eine Beleuchtungseinrichtung der erfindungsgemäßen Art, insbesondere in einem Verkleidungsteil und/oder einer Lehne eines Sitzes, aufweist. Sämtliche Ausführungen bezüglich der erfindungsgemäßen Beleuchtungseinrichtung lassen sich analog auf das erfindungsgemäße Kraftfahrzeug übertragen, mit welchen mithin ebenso die bereits genannten Vorteile erhalten werden können.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: eine Prinzip-Skizze zum Aufbau erfindungsgemäßer Beleuchtungseinrichtungen
- Fig. 2: eine Prinzip-Skizze eines erfindungsgemäßen Kraftfahrzeugs,
- Fig. 3: eine perspektivische Ansicht eines Sitzes des Kraftfahrzeugs, und
- Fig. 4: eine Ansicht einer in dem Sitz verbauten erfindungsgemäßen Beleuchtungseinrichtung.

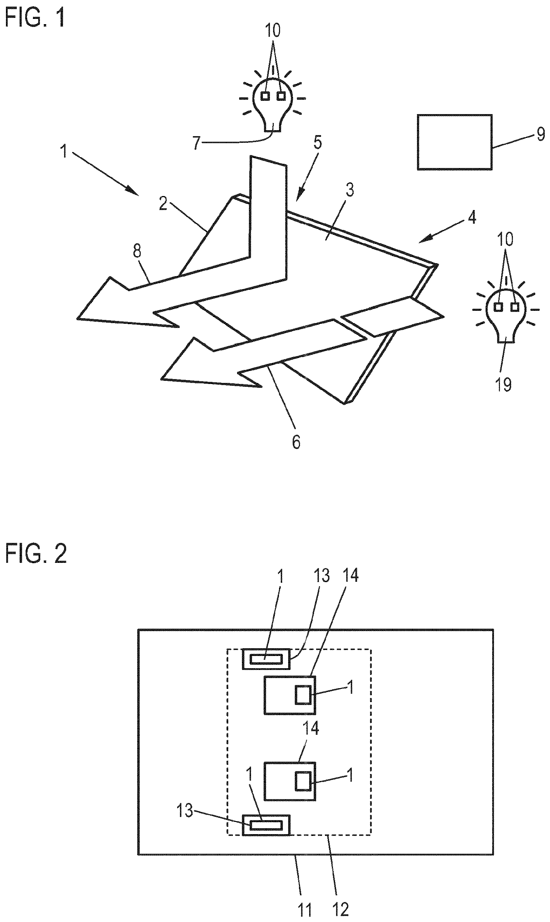

Fig. 1 zeigt eine das grundsätzliche Prinzip einer erfindungsgemäßen Beleuchtungseinrichtung 1 erläuternde Zeichnung. Die Beleuchtungseinrichtung 1 weist ein passives Leuchtelement 2 auf, welches eine Leuchtfläche 3 bereitstellt. Die Leuchtfläche 3 bzw. das Leuchtelement 2 ist vorliegend schräg gestellt gezeigt. Die Leuchtfläche 3 ist in einem ein erstes Leuchtmuster definierenden Bereich 4 transluzent und in wenigstens einem ein zweites Leuchtmuster definierenden Bereich 5 reflektierend ausgebildet. Dabei sind vorliegend nur zur besseren Erläuterung der transluzente Bereich 4 und der reflektierende Bereich 5 nebeneinander gezeigt; üblicherweise können komplexe erste und zweite Leuchtmuster definiert werden, die ineinander eingreifen, miteinander verflochten sind und/oder sich sogar überlappen.

Die Beleuchtungseinrichtung 1 weist nun eine erste, bezüglich einer Außenseite hinter dem Beleuchtungselement 2 angeordnete Lichtquelle 19 auf, deren Licht, wie durch den Pfeil 6 angedeutet, im transluzenten Bereich 4 der Leuchtfläche 3 das Leuchtelement 2 in einer Lichtaustrittsrichtung durchdringt, sodass das erste Leuchtmuster sichtbar wird. Der transluzente Bereich 4 ist lichtdiffundierend für Licht der ersten Lichtquelle 19 ausgestaltet, sodass eine gleichmäßige Ausleuchtung auftritt. Dies kann beispielsweise durch Lichtleitereigenschaften und/oder geeignete Streuzentren und/oder eine geeignete Oberflächenstrukturierung erreicht werden.

Eine zweite Lichtquelle 7 ist, vorliegend oberhalb des Leuchtelements 2, derart angeordnet, dass ihr Licht gemäß dem Pfeil 8 auf die Außenseite des Leuchtelements 2 auftrifft und dort im reflektierenden Bereich 5 in Lichtaustrittsrichtung reflektiert wird, sodass durch diese indirekte Beleuchtung das zweite Leuchtmuster sichtbar wird. Die zweite Lichtquelle 7 ist dabei jedoch verdeckt verbaut.

Sowohl die reflektierenden Eigenschaften des reflektierenden Bereichs 5 als auch die transluzenten Eigenschaften des transluzenten Bereichs 4 können dabei durch eine Materialbehandlung erzeugt werden, die unter anderem auch dafür sorgt, dass das erste Leuchtmuster und das zweite Leuchtmuster bei ausgeschalteten Lichtquellen 19, 7 von außen nicht erkennbar ist. Hier können beispielsweise Laserbehandlungstechniken und/oder Ätztechniken verwendet werden, um mit hoher Präzision insbesondere auch komplexe erste und zweite Lichtmuster zu realisieren. Dabei kann dies durch Materialbehandlung eines Materials eines Grundkörpers des Leuchtelements 2 selbst geschehen; denkbar ist es jedoch auch, dass der Grundkörper mit einer Schicht, beispielsweise einer Lackschicht versehen ist, die zur Herstellung der gewünschten reflektiven und/oder transluzenten Eigenschaften der Materialbehandlung lokal unterzogen wird. Denkbar ist ferner auch eine Nutzung lokal unterschiedlicher Schichten im Bereich der Leuchtfläche 3.

Dabei sind Ausgestaltungen denkbar, in denen gewisse, insbesondere für das erste Teilsystem aus erster Lichtquelle 19 und transluzentem Bereich 4 und das zweite Teilsystem aus zweiter Lichtquelle 7 und reflektierendem Bereich 5 unterschiedliche, Eigenschaften bzw. Lichteindrücke bereits statisch festgelegt sind, indem der transluzente und der reflektierende Bereich 4, 5 zum Erzeugen unterschiedlicher Lichteindrücke ausgebildet sind und /oder die erste und die zweite Lichtquelle 19, 7 Licht wenigstens einer unterschiedlichen Eigenschaft ausstrahlen. Die unterschiedlichen Eigenschaften können dabei über die Bereiche 4, 5 Lichtdiffusion und allgemein Lichtfarbe und/oder Farbtemperatur und/oder Lichtstärke umfassen.

Mit besonderem Vorteil jedoch können die Lichtquellen 19, 7 bezüglich wenigstens einer Eigenschaft des ausgestrahlten Lichts, insbesondere der Lichtfarbe und/oder der Farbtemperatur und/oder der Lichtstärke, zu deren Veränderung ansteuerbar sind, wozu vorliegend die Beleuchtungseinrichtung eine Steuereinheit 9 aufweist. Durch Ansteuerung der Lichtquellen 19, 7 mittels der Steuereinheit 9 lassen sich nicht nur durch An- und Ausschalten der Lichtquellen 19, 7 bereits unterschiedliche Lichteindrücke und Lichtmanifestationen erzielen, sondern auch durch Nutzung unterschiedlicher Lichtfarben, Farbtemperaturen und/oder Lichtstärken. Insbesondere ist die Steuereinheit 9 zum dynamischen Betrieb wenigstens einer der Lichtquellen 19, 7 zum Erzeugen eines dynamischen Lichteindrucks der Leuchtfläche 3 ausgebildet.

Die erste Lichtquelle 19 und die zweite Lichtquelle 7 können, wie in Fig. 1 angedeutet, LEDs 10 umfassen, wobei insbesondere die zweite Lichtquelle 7 zur möglichst gleichmäßigen Ausleuchtung des zweiten Leuchtmusters im reflektierenden Bereich 5 in zumindest einer Richtung ausgedehnt ausgestaltet sein kann, beispielsweise als LED-Array und/oder LED-Matrix, insbesondere als LED-Band.

Fig. 2 zeigt eine Prinzip-Skizze eines erfindungsgemäßen Kraftfahrzeugs 11, welches einen Innenraum 12 für Insassen, mithin ein Interieur, umfasst. Sowohl in Verkleidungsteilen 13 als auch in Lehnen von Sitzen 14 verbaut sind dort erfindungsgemäße Beleuchtungseinrichtungen 1, vorliegend zur Erzeugung von Ambientelicht, vorgesehen.

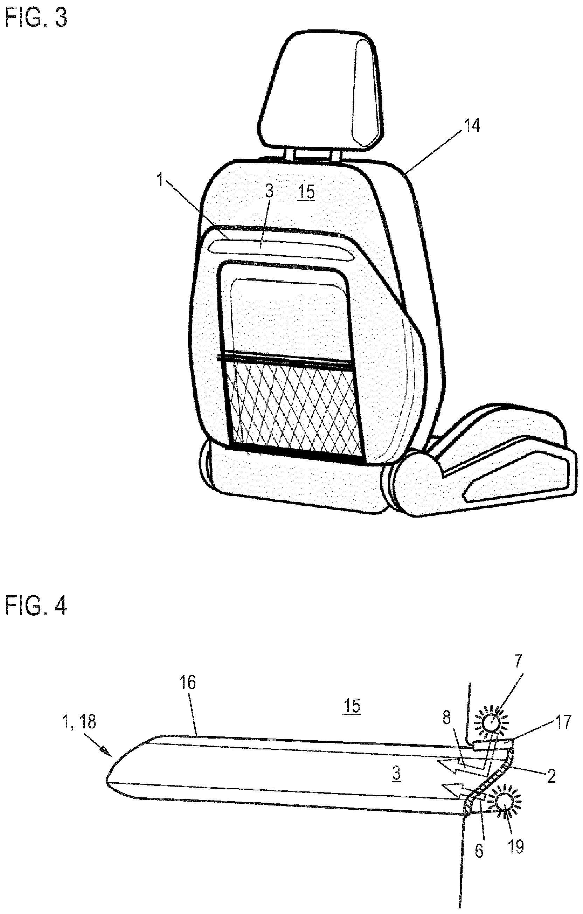

Fig. 3 zeigt eine perspektivische Ansicht eines der Sitze 14. Ersichtlich ist die Beleuchtungseinrichtung 1 in ein Verkleidungsteil an der Rückseite einer Lehne 15 derart integriert, dass für einen Insassen auf der Rückbank die Lichtfläche 3 sichtbar ist.

Fig. 4 zeigt diesbezüglich eine teilweise geschnittene Ansicht im Bereich des Leuchtelements 1, das vorliegend als ein Lichtmodul mit einem generell eine geschwungene Form aufweisenden Träger 16 realisiert ist, der die erneut schräg gestellte Leuchtfläche 3 und somit das Leuchtelement 2 umfasst. Sowohl die erste Leuchtquelle 19 als auch die zweite Leuchtquelle 7 werden dabei von dem Träger 16 getragen, wobei der Träger zum verdeckten Verbau der Leuchtquelle 7 ein nur in einer Richtung lichtdurchlässiges Fenster 17 aufweisen kann. Sowohl die Lichtquelle 7 als auch die Lichtquelle 19 sind vorliegend als LED-Bänder, die sich über die Länge der Beleuchtungseinrichtung 1 erstrecken, ausgebildet. Dabei sei angemerkt, dass ein verdeckter Verbau auch bei direktem Verbau des LED-Bandes anstatt des Fensters 17 gegeben sein kann, da sich die zweite Lichtquelle 7 dann nicht im üblichen Blickfeld eines Insassen befindet. Es sei angemerkt, dass der Träger 16 auch eine Schulter bzw. einen Vorsprung vor dem Bereich einer derartigen direkt verbauten zweiten Lichtquelle 7 aufweisen kann, um diese zu verdecken.

Ersichtlich weist der Träger 16 des Lichtmoduls 18 eine die Oberfläche der hier auch als Verkleidungsteil 13 zu verstehenden Lehne 15 fortsetzende, die Leuchtfläche 3 umfassende Oberfläche auf.

## Patentansprüche

1. Beleuchtungseinrichtung (1) für das Interieur eines Kraftfahrzeugs (1), insbesondere für ein Verkleidungsteil (13) und/oder die Rückenlehne (15) eines Sitzes (14), aufweisend ein eine äußere Leuchtfläche (3) mit einer Lichtausstrahlrichtung definierendes, passives Leuchtelement (2) und wenigstens zwei unterschiedlich schaltbare Lichtquellen (19, 7), wobei eine erste Lichtquelle (19) das wenigstens teilweise transluzente Leuchtelement (2) zur Beleuchtung in die Lichtausstrahlrichtung durchleuchtet,
**dadurch gekennzeichnet,**
**dass** das Leuchtelement (2) zur Festlegung der Leuchtfläche (3) in wenigstens einem ein erstes Leuchtmuster definierenden Bereich (4) in Lichtaustrittsrichtung transluzent und in wenigstens einem ein zweites Leuchtmuster definierenden Bereich (5) reflektierend ausgebildet ist und eine zweite Lichtquelle (7) zur Ausleuchtung der Außenseite des Leuchtelements (2) derart vorgesehen ist, dass das von außen auf das Leuchtelement (2) auftreffende Licht der zweiten Lichtquelle (7) durch den reflektierenden Bereich (5) in die Lichtaustrittsrichtung reflektiert wird, wobei das Leuchtelement (2) zumindest im transluzenten Bereich (4) derart ausgestaltet ist, dass das erste Leuchtmuster bei ausgeschalteter erster Lichtquelle (19) von außen nicht erkennbar ist und das zweite Leuchtmuster bei ausgeschalteter erster und zweiter Lichtquelle (19, 7) von außen nicht erkennbar ist.

2. Beleuchtungseinrichtung nach Anspruch 1,
**dadurch gekennzeichnet,**
**dass** die Nichterkennbarkeit durch eine zur Erzeugung des transluzenten Bereichs (4) und/oder des reflektierenden Bereichs (5) gewählte Materialbehandlung gegeben ist.

3. Beleuchtungseinrichtung nach einem der vorangehenden Ansprüche,
**dadurch gekennzeichnet,**
**dass** der transluzente Bereich (4) lichtdiffundierend für Licht der ersten Lichtquelle (19) ist.

4. Beleuchtungseinrichtung nach einem der vorangehenden Ansprüche,
**dadurch gekennzeichnet,**
**dass** der reflektierende und der transluzente Bereich (5, 4) wenigstens teilweise überlappen und/oder dass die Leuchtmuster auf der Leuchtfläche (3) ineinander verflochten sind.

5. Beleuchtungseinrichtung nach einem der vorangehenden Ansprüche,
**dadurch gekennzeichnet,**
**dass** der transluzente und der reflektierende Bereich (4, 5) zum Erzeugen unterschiedlicher Lichteindrücke, insbesondere unterschiedlicher Lichtdiffusion und/oder Lichtfarbe und/oder Farbtemperatur und/oder Lichtstärke, ausgebildet sind.

6. Beleuchtungseinrichtung nach einem der vorangehenden Ansprüche,
**dadurch gekennzeichnet,**
**dass** die erste und die zweite Lichtquelle (19, ,7) Licht wenigstens einer unterschiedlichen Eigenschaft ausstrahlen, insbesondere unterschiedlicher Lichtfarbe und/oder Farbtemperatur und/oder Lichtstärke.

7. Beleuchtungseinrichtung nach einem der vorangehenden Ansprüche,
**dadurch gekennzeichnet,**
**dass** sie ferner wenigstens eine Steuereinheit (9) zum Steuern des Betriebs der Lichtquellen (19, 7) aufweist.

8. Beleuchtungseinrichtung nach Anspruch 7,
**dadurch gekennzeichnet,**
**dass** wenigstens eine der Lichtquellen (19, 7) bezüglich wenigstens einer Eigenschaft des ausgestrahlten Lichts, insbesondere der Lichtfarbe und/oder Farbtemperatur und/oder Lichtstärke, zu deren Veränderung ansteuerbar ist und/oder die Steuereinheit (9) zum dynamischen Betrieb wenigstens einer der Lichtquellen (19, 7) zum Erzeugen eines dynamischen Lichteindrucks der Leuchtfläche (3) ausgebildet ist.

9. Beleuchtungseinrichtung nach einem der vorangehenden Ansprüche,
**dadurch gekennzeichnet,**
**dass** die erste Lichtquelle (19) und/oder die zweite Lichtquelle (7) wenigstens eine LED (10) umfasst und/oder in wenigstens einer Richtung ausgedehnt ist.

10. Beleuchtungseinrichtung nach einem der vorangehenden Ansprüche,
**dadurch gekennzeichnet,**
**dass** das Leuchtelement (2) wenigstens in dem Bereich der Leuchtfläche (3) gegen die Horizontale und die Vertikale geneigt ist und die zweite Lichtquelle (7) oberhalb der Leuchtfläche (3) angeordnet ist.

11. Beleuchtungseinrichtung nach einem der vorangehenden Ansprüche,
**dadurch gekennzeichnet,**
**dass** sie als ein Lichtmodul (18) mit einem das Leuchtelement (2) umfassenden Träger (16), an dem die Lichtquellen (19, 7) befestigt sind, ausgebildet ist.

12. Beleuchtungseinrichtung nach Anspruch 11,
**dadurch gekennzeichnet,**
**dass** das Lichtmodul (18) zum Einsetzen in ein Verkleidungselement (13) des Kraftfahrzeugs (11) ausgebildet ist, wobei der Träger (16) eine die Oberfläche des Verkleidungsteils (13) fortsetzende, die Leuchtfläche (3) umfassende Oberfläche aufweist.

13. Beleuchtungseinrichtung nach einem der vorangehenden Ansprüche,
**dadurch gekennzeichnet,**
**dass** die zweite Lichtquelle (7) verdeckt verbaut ist.

14. Kraftfahrzeug (11), aufweisend wenigstens eine Beleuchtungseinrichtung (1) nach einem der vorangehenden Ansprüche.

## Claims

1. Illumination device (1) for the interior of a motor vehicle (1), in particular for a trim part (13) and/or the backrest (15) of a seat (14), comprising a passive luminous element (2), which defines an outer luminous area (3) with a light emission direction, and at least two differently switchable light sources (19, 7), wherein a first light source (19) shines through the at least partially translucent luminous element (2) in order to provide illumination in the light emission direction,
**characterized**
**in that** in order to specify the luminous area (3), the luminous element (2) is designed to be translucent in the light exit direction in at least one region (4) which defines a first luminous pattern and is designed to be reflective in at least one region (5) which defines a second luminous pattern, and a second light source (7) is provided in such a way for illuminating the outside of the luminous element (2) that the light from the second light source (7) incident on the luminous element (2) from the outside is reflected into the light exit direction by the reflective region (5), wherein at least in the translucent region (4), the luminous element (2) is designed in such a way that the first luminous pattern is not recognizable from the outside when the first light source (19) is switched off and the second luminous pattern is not recognizable from the outside when the first and second light sources (19, 7) are switched off.

2. Illumination device according to Claim 1,
**characterized**
**in that** the non-recognizability is provided by a material treatment chosen for producing the translucent region (4) and/or the reflective region (5).

3. Illumination device according to any of the preceding claims,
**characterized**
**in that** the translucent region (4) acts like a light diffuser for light from the first light source (19).

4. Illumination device according to any of the preceding claims,
**characterized**
**in that** the reflective and translucent regions (5, 4) overlap at least in part and/or in that the luminous patterns on the luminous area (3) are interwoven.

5. Illumination device according to any of the preceding claims,
**characterized**
**in that** the translucent and reflective regions (4, 5) are designed to generate different light impressions, in particular different light diffusion and/or light colours and/or colour temperatures and/or light intensities.

6. Illumination device according to any of the preceding claims,
**characterized**
**in that** the first and second light sources (19, 7) emit light with at least one different property, in particular with different light colours and/or colour temperatures and/or light intensities.

7. Illumination device according to any of the preceding claims,
**characterized**
**in that** it further comprises at least one control unit (9) for controlling the operation of the light sources (19, 7).

8. Illumination device according to Claim 7,
**characterized**
**in that** at least one of the light sources (19, 7) can be controlled to bring about a change in respect of at least one property of the emitted light, in particular the light colour and/or colour temperature and/or light intensity, and/or the control unit (9) is designed for dynamic operation of at least one of the light sources (19, 7) in order to generate a dynamic light impression of the luminous area (3).

9. Illumination device according to any of the preceding claims,
**characterized**
**in that** the first light source (19) and/or the second light source (7) comprises at least one LED (10) and/or is extended in at least one direction.

10. Illumination device according to any of the preceding claims,
**characterized**
**in that** at least in the region of the luminous area (3), the luminous element (2) is inclined with respect to the horizontal and the vertical, and the second light source (7) is arranged above the luminous area (3).

11. Illumination device according to any of the preceding claims,
**characterized**
**in that** it is formed as a light module (18) having a support (16) which comprises the luminous element (2) and to which the light sources (19, 7) are attached.

12. Illumination device according to Claim 11,
**characterized**
**in that** the light module (18) is designed for insertion into a trim element (13) of the motor vehicle (11), wherein the support (16) has a surface which continues the surface of the trim part (13) and comprises the luminous area (3).

13. Illumination device according to any of the preceding claims,
**characterized**
**in that** the second light source (7) is installed in concealed fashion.

14. Motor vehicle (11), comprising at least one illumination device (1) according to any of the preceding claims.

## Revendications

1. Dispositif d'éclairage (1) pour l'intérieur d'un véhicule automobile (1), en particulier pour une pièce de garnissage (13) et/ou le dossier (15) d'un siège (14), comportant un élément lumineux passif (2) définissant une surface lumineuse extérieure (3) ayant une direction d'émission de lumière, et au moins deux sources lumineuses (19, 7) pouvant être commutées différemment, une première source lumineuse (19) éclairant l'élément lumineux (2) au moins partiellement translucide pour un éclairage dans la direction d'émission de lumière,
**caractérisé**
**en ce que** l'élément lumineux (2) est réalisé, pour définir la surface lumineuse (3), de manière translucide dans la direction de sortie de lumière dans au moins une zone (4) définissant un premier motif lumineux, et de manière réfléchissante dans au moins une zone (5) définissant un second motif lumineux, et **en ce qu'**une seconde source lumineuse (7) est prévue pour éclairer la face extérieure de l'élément lumineux (2) de telle sorte que la lumière provenant de la deuxième source lumineuse (7), incidente depuis l'extérieur sur l'élément lumineux (2), est réfléchie par la zone réfléchissante (5) dans la direction de sortie de lumière, l'élément lumineux (2) étant réalisé au moins dans la zone translucide (4) de telle sorte que le premier motif lumineux n'est pas identifiable de l'extérieur lorsque la première source lumineuse (19) est éteinte, et que le second motif lumineux n'est pas identifiable de l'extérieur lorsque les première et seconde sources lumineuses (19, 7) sont éteintes.

2. Dispositif d'éclairage selon la revendication 1,
**caractérisé**
**en ce que** le caractère non identifiable est assuré par un traitement de matériau sélectionné pour produire la zone translucide (4) et/ou la zone réfléchissante (5).

3. Dispositif d'éclairage selon l'une des revendications précédentes,
**caractérisé**
**en ce que** la zone translucide (4) diffuse la lumière provenant de la première source lumineuse (19).

4. Dispositif d'éclairage selon l'une des revendications précédentes,
**caractérisé**
**en ce que** la zone réfléchissante et la zone translucide (5, 4) se chevauchent au moins partiellement et/ou **en ce que** les motifs lumineux présents sur la surface lumineuse (3) sont entrelacés.

5. Dispositif d'éclairage selon l'une des revendications précédentes,
**caractérisé**
**en ce que** la zone translucide et la zone réfléchissante (4, 5) sont réalisées pour produire des impressions lumineuses différentes, en particulier une diffusion de lumière et/ou une couleur de lumière et/ou une température de couleur et/ou une intensité lumineuse différentes.

6. Dispositif d'éclairage selon l'une des revendications précédentes,
**caractérisé**
**en ce que** les première et seconde sources lumineuses (19, 7) émettent une lumière présentant au moins une propriété différente, en particulier une couleur de lumière et/ou une température de couleur et/ou une intensité lumineuse différentes.

7. Dispositif d'éclairage selon l'une des revendications précédentes,
**caractérisé**
**en ce qu'**il comporte en outre au moins une unité de commande (9) pour commander le fonctionnement des sources lumineuses (19, 7).

8. Dispositif d'éclairage selon la revendication 7,
**caractérisé**
**en ce qu'**au moins l'une des sources lumineuses (19, 7) peut être commandée en ce qui concerne au moins une propriété de la lumière émise, en particulier la couleur de lumière et/ou la température de couleur et/ou l'intensité lumineuse, en vue de sa modification, et/ou **en ce que** l'unité de commande (9) est réalisée pour un fonctionnement dynamique d'au moins l'une des sources lumineuses (19, 7) afin de générer une impression lumineuse dynamique de la surface lumineuse (3).

9. Dispositif d'éclairage selon l'une des revendications précédentes,
**caractérisé**
**en ce que** la première source lumineuse (19) et/ou la seconde source lumineuse (7) comportent au moins une LED (10) et/ou sont étendues dans au moins une direction.

10. Dispositif d'éclairage selon l'une des revendications précédentes,
**caractérisé**
**en ce que** l'élément lumineux (2) est incliné par rapport à l'horizontale et à la verticale au moins dans la zone de la surface lumineuse (3) et **en ce que** la seconde source lumineuse (7) est disposée au-dessus de la surface lumineuse (3).

11. Dispositif d'éclairage selon l'une des revendications précédentes,
**caractérisé**
**en ce qu'**il est réalisé sous la forme d'un module lumineux (18) comportant un support (16) comprenant l'élément lumineux (2) et sur lequel sont fixées les sources lumineuses (19, 7).

12. Dispositif d'éclairage selon la revendication 11,
**caractérisé**
**en ce que** le module lumineux (18) est conçu pour être inséré dans un élément de garnissage (13) du véhicule automobile (11), le support (16) présentant une surface qui prolonge la surface de l'élément de garnissage (13) et comprend la surface lumineuse (3).

13. Dispositif d'éclairage selon l'une des revendications précédentes,
**caractérisé**
**en ce que** la seconde source lumineuse (7) est montée de manière dissimulée.

14. Véhicule automobile (11) comportant au moins un dispositif d'éclairage (1) selon l'une des revendications précédentes.
